# EUROPEAN PATENT APPLICATION

(11) **EP 0 689 321 A1**
(43) Date of publication of application: **27.12.1995**
(21) Application number: 94109763.6
(22) Date of filing: 23.06.1994
(51) Int. Cl.: H04L 12/64, H04L 12/433

(54) **System for high availablility of network-wide bandwidth allocation**

(71) Applicant: International Business Machines Corporation, Armonk, N.Y. 10504 (US)
(72) Inventor: Warren, Jeff, NC-27502 APEX (US); Francois, Pascal, F-06140 VENCE (FR); Raimbault, Frederic, F-06800 Cagnes-sur-mer (FR); Lebrun, Eric, F-06640 Saint-Jeannet (FR)
(74) Representative: de Pena, Alain

(57) **Abstract**

To address Quality of Service (QoS) i.e. end-to-end guaranteed delay in a domain of Local Area Networks (LANs) interconnected by at least one FDDI segment, network-wide bandwidth allocation is improved by a high availability Third Party Requestor (3PR) agent.

The 3PR receives from the QoS Allocator all information that it needs to ask for bandwidth reservation on the FDDI segment. Following the Station Management standard , the 3PR is able to act on behalf of an FDDI station that will submit synchronous traffic and ask for bandwidth allocation to a Synchronous Bandwidth Allocator (SBA). According to the SBA decision, the 3PR will then answer to the network-centralized QoS Allocator which will grant or deny the allocation over the whole path within the LAN domain.

If for some reasons (failure , intentional stop for maintenance , ...) the SBA process forces the acting SBA to move to another station, the 3PR shall follow as well and start on this new station.

## Description

The present invention relates to the data communication field and more particularly to a system for high availability of network-wide bandwidth allocation over a network made of at least one FDDI segment.

It is a current issue in the data communication field to allow Multimedia applications to run over interconnected networks. More particularly, it is a current issue to fulfill the need by Multimedia applications of bandwidth and end-to-end guaranteed delay, i.e. what is called Quality of Service (QoS) requirements. Such QoS requirements imply that an interconnected network be able to manage its available bandwidth and response time which are likely to change throughout time and impact the communication quality.

Fiber Distributed Data Interface (FDDI) standard describes a dual counter-rotating fiber-optic ring operating at 100 MBps. One of the prime interests in FDDI is the establishment of a network made of a very high-speed backbone (the FDDI segment) interconnecting heterogeneous Local Area Networks (LANs).

Network-wide bandwidth allocation over such an interconnected LAN domain is dealt with in European patent application 93480041.8 filed on April 19, 1993, by International Business Machines Corp, the teaching of which is incorporated hereafter by reference. To reserve a certain level of QoS on such an interconnected LAN domain, two components are put in place: an Allocator and a Requestor. The Allocator is the component responsible for maintaining awareness of the capacity of the LAN components (i.e. bridges and segments), determining whether a particular request for a bandwidth allocation can be granted. The Requestor is the component responsible for making a request to reserve a certain QoS for an application.

Over the FDDI segment however, the QoS requirements are fulfilled by usage of synchronous traffic, and particularly a Synchronous Bandwidth Allocator (SBA) as defined in European patent application 93480221.6 filed on December 8, 1993 by International Business Machines Corp. The SBA is responsible for allocating synchronous bandwidth to applications requiring guaranteed bandwidth and predictable delay. A single SBA manages an FDDI segment, each FDDI segment has one and only one SBA actively managing all synchronous traffic. The latter piece of prior art proposes the implementation of slave SBA applications to monitor the FDDI segment and take on the role of a master SBA when needed, such process being known as High Availability SBA.

To enable the coexistence over the interconnected LAN domain of the two bandwidth allocation processes (the centralized allocation process from the QoS Allocator and the SBA over FDDI segment), it has been the object of European patent application 93480041.8 to propose a Third Party Requestor (3PR) agent: the 3PR receives from the QoS Allocator all information that it needs to ask for bandwidth reservation on the FDDI segment. Following the Station Management standard , the 3PR is able to act on behalf of the FDDI station that will submit synchronous traffic and ask for bandwidth allocation to the SBA. According to the SBA decision, the 3PR will then answer to the QoS Allocator which will grant or deny the allocation over the whole path.

The present invention solves the problem raised by the failure of the 3PR on a Fiber Distributed Data Interface segment. The concept of a master and slave entity is used to develop the high availability of 3PR model. The master application is responsible for interfacing the Qos Allocator and the SBA as described in the background art.

When the user enables a 3PR application (which conforms to this invention) the new state machine shall bring the 3PR either to an **ACTIVE** state where it will act as a master or to a new 3PR state called **BACKUP** state where it should be ready to replace the master application if it fails, or even to a **STANDBY** state where it stops since there are already master and backup applications.

The decision to go to ACTIVE , BACKUP or STANDBY state is directly dependent on the state of the SBA in the same station as of the 3PR application According to the state of the SBA present in that station, the 3PR shall into the same state. It is mandatory to have these 2 applications on the same station: it prevents from increasing traffic over the FDDI segment and is more efficient since allocations requests /responses are going to the same station.

If for some reasons (failure , intentional stop for maintenance , ...) the SBA High Availability process forces the acting SBA to move to another station, the 3PR shall follow as well and start on this new station.

The newly inserting 3PR application learns if SBA application is master by transmitting an Request Allocation frame (RAF) request with an **NULL** payload. Since these 2 applications shall reside on the same station, the Source Address of the RAF response sent by the master SBA shall determine if it runs on the master SBA station. If this address doesn't match its own , then the newly inserting 3PR application should get the address of the slave SBA (vendor specific MIB attribute kept in the master SBA MIB).

If the 3PR detects that it runs over the slave SBA station , it shall go into the BACKUP state . If none of these addresses match its own , it shall go into the standby state.

To detect failure of the master SBA , the slave 3PR shall monitor the SBA_Hello request and SBA_Hello responses. If a SBA_Response is missing, the slave 3PR shall get a MIB attribute (SBA Available) which will indicate if the slave SBA became a master SBA. In this case, the slave 3PR becomes the master 3PR.

The effect of the invention is thus to allow a redundant 3PR application to detect a failure from a SBA or from the master 3PR and then provide High Availability Service between the QoS Allocator and the High Availability SBA.

More particularly, the invention comprises a system for high availability of network-wide bandwidth allocation in a network including a FDDI segment, comprising:
- a client running over said network an application and a server connected to said FDDI segment comprising a Quality of Service Requestor,
- a network bandwidth allocator comprising a Quality of Service Allocator getting requests and setting answers from and to said Quality of Service Requestor,
- a first synchronous bandwidth allocator on said FDDI segment, and a second synchronous bandwidth allocator on said FDDI segment for taking over said first synchronous bandwidth allocator when it is in failure,
- a first 3rd Party Requestor, for interfacing between said network bandwidth allocator and said first synchronous bandwidth allocator, and between said server and said first synchronous bandwidth allocator, and
- a second 3rd Party Requestor, for taking over said first 3rd Party Requestor and interfacing between said network bandwidth allocator and said second synchronous bandwidth allocator, and between said server and said second synchronous bandwidth allocator, when said second synchronous bandwidth allocator has taken over said first synchronous bandwidth allocator.

Even more particularly, the invention comprises a system for high availability bandwidth allocation in a domain of LANs interconnected by at least one FDDI segment, comprising:
- a centralized bandwidth allocator over said domain,
- a first device connected to said FDDI segment, having first means for allocating synchronous bandwidth over said FDDI segment to a bandwidth requesting device, and second means for interfacing between said requesting device and said centralized allocator,
- a second device connected to said FDDI segment, having means for requesting synchronous bandwidth over said FDDI segment,
- a third device connected to said FDDI segment, having first means for establishing with said first means of said first device a communication, exchanging between said first and third devices information regarding the allocation of synchronous bandwidth to said second device, and taking over said first means in said first device by allocating synchronous bandwidth over said FDDI segment when said first device is in failure, and
- second means in said third device to detect whether the first means in said third device have taken over, and when they have, take over said second means in said first device for interfacing between said requesting device and said centralized allocator.

In one particular embodiment, the second means in said third device include:
- means to monitor information exchange on said FDDI segment between said first means of said first and third devices, and
- means to get parameters from said first means of said third device to determine whether they have taken over allocating synchronous bandwidth over said FDDI segment.

The invention will be better understood from the following detailed description read in conjunction with the following schematics:
Fig.1 shows the allocation of bandwidth over an Fiber Distributed Data Interface segment
Fig.2 illustrates the structure of QoS Allocator and QoS Requestor over Local Area Network.
Fig.3 shows the Qos Allocation process between the QoS Requestor and the QoS Allocator
Fig.4 shows the Qos Deallocation process between the QoS Requestor and the QoS Allocator
Fig.5 shows the Qos Change Allocation process between the QoS Requestor and the QoS Allocator
Fig.6 shows the Qos Refresh process between the QoS Requestor and the QoS Allocator
Fig.7 shows the Qos Registration process between the QoS Requestor and the QoS Allocator
Fig.8 shows the relationship between the 3PR, the SBA, the QoS Requestor, and the QoS Allocator.
Fig.9 shows the FDDIAllocate process between the 3PR the QoS Allocator.
Fig.10 shows the FDDIChange process between the 3PR and the QoS Allocator.
Fig.11 shows the FDDIStatus process between the 3PR and the QoS Allocator.
Fig.12 shows the FDDIDeallocate process between the and the QoS Allocator, initiated by the 3PR.
Fig.13 shows the FDDIDeallocate process between the and the QoS Allocator, initiated by the NRR (QoS Allocator).
Fig.14 shows the Registration process between the 3PR and the QoS Allocator, initiated by the NRR.
Fig.15 shows the Registration process between the 3PR and the QoS Allocator, initiated by the 3PR.
Fig.16 shows the invention Init_actions for the HA_3PR
Fig.17 shows the SBA states
Fig.18 shows the High Availability SBA states
**FDDI standard** is well-known to the person skilled in the art. Sufficient is it here to refer for example to European patent application 93480221.6, in particular its pages 1 to 9 and associated schematics.

The **allocation of Synchronous Bandwidth over an Fiber Distributed Data Interface network** is performed by using the Resource Allocation frame protocol. This protocol assumes one central allocator of the Synchronous Bandwidth resource, and provides for the management of Synchronous Bandwidth Allocator, the detection of over allocation, and ability to recover from faults due to over-allocation.

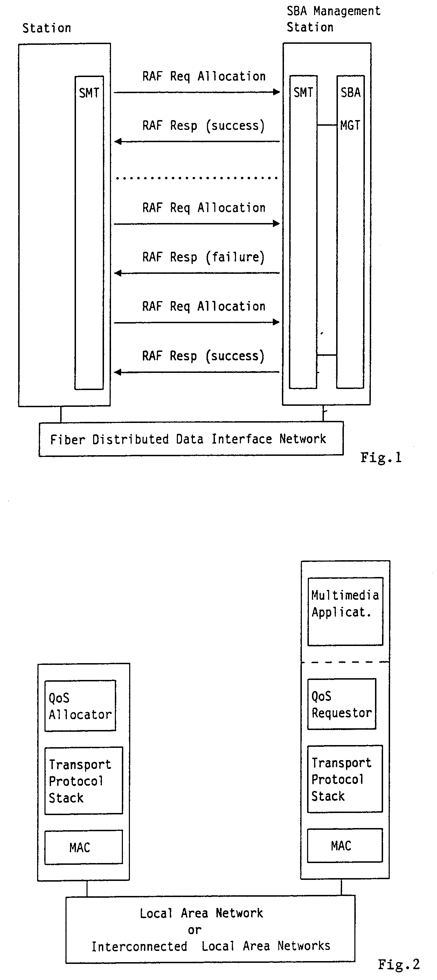

Fig.1 shows an example of an allocation of Synchronous Bandwidth.

A station must receive an allocation of Synchronous Bandwidth before initiating synchronous transmission.

A station that wants to change its current allocation of Synchronous Bandwidth must request the new allocation amount from the Synchronous Bandwidth Allocator Management station.

To request a change in allocation, a station sends an Resource Allocation frame Request (Request Allocation) to a Synchronous Bandwidth Allocator Management station. A Synchronous Bandwidth Allocator Management station will respond with an Resource Allocation frame Response indicating success or failure of the request. If the request fails, the station may adjust its allocation request to within the available bandwidth specified in the response frame and restart the exchange.

The Station changes its Synchronous Bandwidth attributes - ie in the Management Information Base - when response indicates successful allocation.

**The SBA application** is responsible for allocating synchronous bandwidth to applications requiring guaranteed bandwidth and predictable delay. A single SBA manages an FDDI segment, each FDDI segment has one and only one SBA actively managing all synchronous traffic. If this SBA application fails, additional allocations would not be allowed, existing allocations could not increase or decrease their allocations.

The synchronous allocation request processing is straight forward, whereas the process of deallocation due to over-utilization or inconsistencies is not. The SBA complexities are in various SBA Actions where deallocations are generated and in the allocation data structures where many SBA parameters are maintained.

The SBA functions required in the FDDI Synchronous Implementer Agreement (IA) are listed below with an example SBA state diagram detailing the IA implementation.
· Maintain an SBA Allocation MIB
   These data structure(s) maintain all the necessary SBA information used by the SBA state diagram. The SBA state diagram example identifies important elements of these data structures. The SBM internal state diagram uses a notation to identify which end-station sub structure is or shall be modified. An example of the information maintained in an SBA data structure for a synchronous end-station is.
   ■ Active individual MAC allocation(s), i.e. payload
   ■ TimeStamp of latest allocation modification (+/-), used in report actions
   ■ SBA Category requirement, used in recovery actions
   ■ Max_T_Neg, used in allocate and recovery actions
   ■ Min_Segment_Size, used in allocate and recovery actions
   ■ Variety of flags, signals, counters, and timers.
· Recover from
   ■ T_Neg change causing over-utilization
   ■ T_Neg change causing Segment_Size violations
   ■ Reconfigurations causing over-utilization
· Other required SBA functionality includes
   ■ Payload consistency check via SBA Reporting
   ■ MIB consistency check via NIF request (Station_State)
   ■ SBA Available Policy defaulting
   ■ Control fddiMACT-Neg via local access of fddiMACT-Req
   ■ etc ....

The purpose of the **Synchronous Bandwidth Management** (SBM) function is to control synchronous allocations on a single FDDI segment. Allocations are limited to the primary FDDI ring. The amount of available synchronous bandwidth is set in the SBA_Available parameter. The Synchronous Bandwidth Allocator is responsible for the regulation of the synchronous traffic on the FDDI ring.

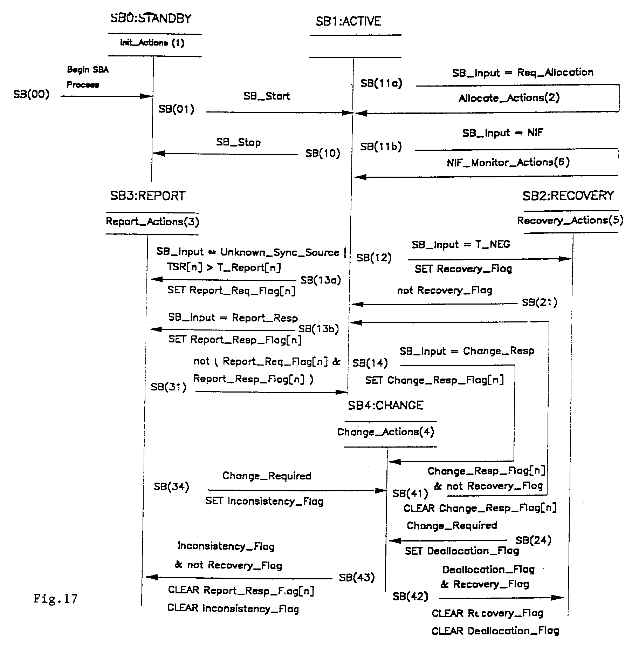

The SBM provides recovery mechanisms to recover unused bandwidth, resolves T_Neg and reconfiguration changes. Many of the SBM state diagram inputs are provided by the underlying FDDI sub-system supporting it. Fig.17 shows an example of SBA state machine.

### STATE SB0 : STANDBY

The SBA process begins with transition SB(00) where SBM enters the Standby State. In this state, the SBM waits for the assertion of SB_Start, this occurs after SBA initializes the SBA application.

### SB(01)StartSBAManager -

### STATE SB1 : ACTIVE

The SBA monitors the FDDI segment from the Active State. Normally SBA is in this state unless an active allocation is being refreshed or SBA is recovering from an over-allocation condition.
**SB(10)**: StopSBAManager -
**SB(11a)**: AllocationRequest -
**SB(11b)**: NIFMonitoring -
**SB(12)**: PotentialRecoveryRequired -
**SB(13a)**: ReportAllocation -
**SB(13b)**: ProcessReportResponse -
**SB(14)**: ProcessChangeResponse -

### STATE SB2 : RECOVERY

The Recovery state indicates SBM has detected a T_neg change potentially requiring a de-allocation of synchronous bandwidth. Entering this state causes SBM to re-evaluate all active allocations contained within the SBA MIB.
**SB(21)**: RecoveryCompleted -
**SB(24)**: RecoveryDeallocation -

### STATE SB3 : REPORT

The Report state is used to refresh active allocations and to perform active allocation consistency checks. The consistency checking is necessary to recover unused synchronous allocations when the end-station has been removed from the ring prior to deallocating its bandwidth.
**SB(31)**: ReportComplete -
**SB(34)**: InconsistencyDetected -

### STATE SB4 : CHANGE

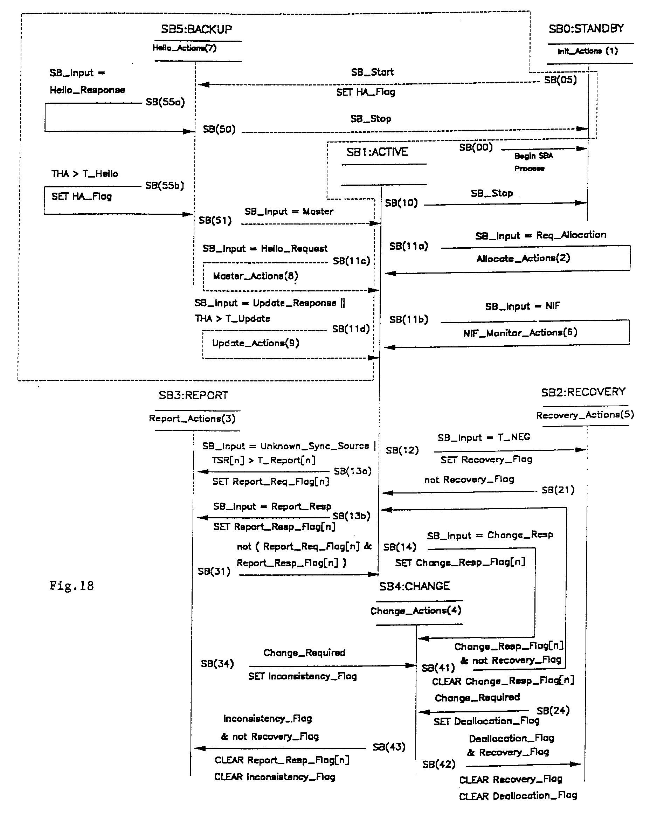

The Change state is used by SBM to issue an SBA RAF Change allocation frame. Entry into this state occurs when Report Actions detect an allocation inconsistency or the Recovery Actions require a de-allocation to recover from a ring over-allocation condition or when an SBA RAF Change Allocation response has been received.
**SB(41)**: CompletedDeallocation -
**SB(42)**: PotentialAdditionalRecoveryRequired -
**SB(43)**: ContinueReportProcess -
The failure of an SBA application is addressed by **Highly Available Synchronous Bandwidth Allocator**. Highly Available Synchronous Bandwidth Allocator provides extensions to the FDDI Synchronous Implementer's Agreement. In particular the SBA Internals section is modified to allow slave SBA applications to monitor the FDDI segment and take on the role of master SBA when needed (see Fig.18).

The concept of a master and slave allocator is used to develop the high availability SBA model. The master SBA is the SBA responsible for granting or denying allocation requests as well as manage disturbances resulting from network changes, such as changes in token rotation delays.

The master SBA will communicate with the slave SBA (if present) to update the slave with current allocation information. These updates are communicated from master to slave via the unique extended service frame protocol using an IBM specific encoding. The updates occur when allocations are modified. When the user enables this SBA application, the underlying SBA state machine shall enter into a new SBA state called BACKUP State as opposed to directly going to the Active State. The Active state is now for one and only one SBA application, the master SBA.

The purpose of this new state is to learn if a master and/or slave are currently operational. The newly inserting SBA application learns if other SBA applications are present by using an SBA_Hello Request/Response process.

This allows a redundant SBA application (the slave SBA) to keep a shadow copy of the master's SBA MIB. When the master fails, the FDDI segment is without an SBA manager for three minutes if a slave SBA is present. Detection of the master failure occurs when the slave fails to receive three consecutive master present announcements. When the slave detects a master failure it transitions to the Active State where it assumes the role of master. If the slave does not have all of the master's SBA MIB, the slave shall learn about the unknown data using the SBA report request protocol.

More details with respect to SBA and highly available SBA may be had at the reading of European patent application 93480221.6, in particular pages 11 to 32 (SBA) and 33 to 48 (High availability SBA), and associated schematics.

Hereafter is described the functional components and the associated protocols required for **Quality of Service Management on Local Area Network (Network Resource Reservation - NRR)**. It includes two components, a QoS Requestor and a QoS Allocator, as well as the protocols that are exchanged between a Requestor and the Allocator. A QoS Requestor is needed for all LAN stations that want to send traffic requiring Quality of Service guarantees (e.g. multimedia traffic). Only a single QoS Allocator is required for a given bridged Local Area Network.

Fig.2 depicts the QoS Requestor and QoS Allocator structure on a Local Area Network.

The QoS Requestor includes the following functions:
· Accept a request for a specified Quality of Service from a specified source of Local Area Network traffic -ie a multimedia application - to a specified destination on the Local Area Network.
· Format and forward the request to the QoS Allocator on the Local Area Network.
· Receive the result of a Quality of Service request from the QoS Allocator and inform the application of the result of the request.
· Maintain information about Quality of Service requests that have been granted by the QoS Allocator to the QoS Requestor.

The QoS Allocator includes the following functions:
· Accept a request from QoS Requestor for a specified Quality of Service from a specified source (or station) to a specified destination on the Local Area Network.
· Quality of Service calculation. This function examines a Quality of Service request and the current status of allocated Quality of Service to determine whether the network can provide the specified Quality of Service. QoS Allocator gets that information from the 3rd Party Requestor.
· Based on the calculation, decide whether to grant or reject the Quality of Service request.
· Maintain information about the status of Quality of Service that has been allocated in the Local Area Network and about the capacity of the network to support Quality of Service reserved streams.

The Qos Management protocol enables a QoS Requestor entity to register with a QoS Allocator entity in the network, and to interact with the QoS Allocator to manage network Qos for data streams.

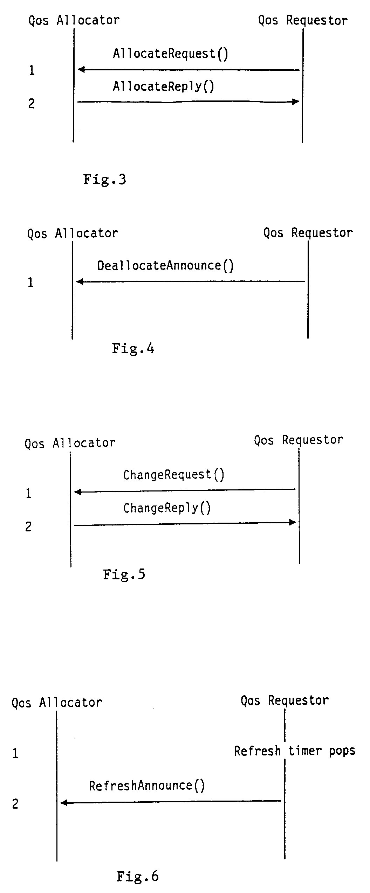

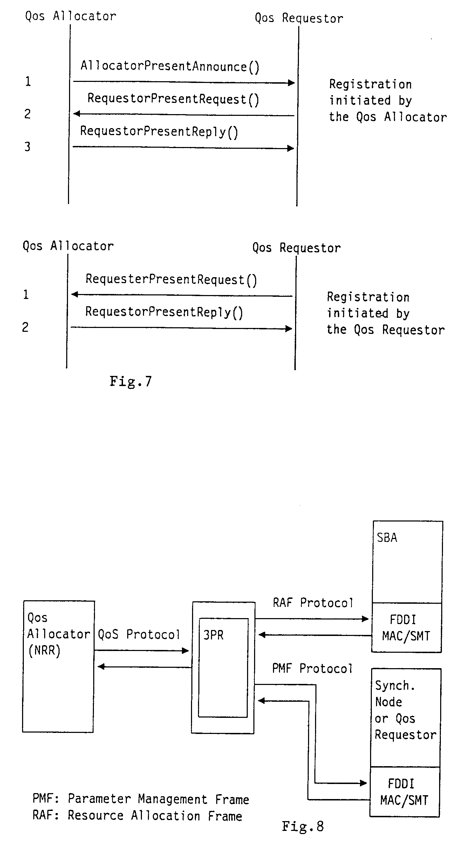

Fig.3 shows QoS Allocation, Fig.4 QoS Deallocation, Fig.5 a change of QoS Allocation, Fig.6 a Refresh of bandwidth, and Fig.7 the Registration Protocol.

The **3rd Party Requestor** solves the problem raised by the allocation of synchronous bandwidth on a Fiber Distributed Data Interface segment when this allocation is done by a centralized allocator in an interconnected Local Area Network domain.

This centralized allocator (or QoS Allocator) is responsible to do the allocation on a network-wide basis, whatever the protocol used between the two points exchanging synchronous traffic. But to be able to do this, it needs to interact with agents responsible for bandwidth allocation on every Fiber Distributed Data Interface segment : the Synchronous Bandwidth Allocator. This interface is done by an agent named the 3rd Party Requestor.

This 3rd Party Requestor receives from the QoS Allocator all information that it needs to ask for bandwidth reservation on the Fiber Distributed Data Interface segment. Following the Station Management standard , the 3rd Party Requestor is able to act on behalf of the Fiber Distributed Data Interface station that will submit synchronous traffic and ask for bandwidth allocation to the Synchronous Bandwidth Allocator. According to the Synchronous Bandwidth Allocator decision, the 3rd Party Requestor will then answer to the QoS Allocator which will grant or deny the allocation over the whole path.

The 3rd Party Requestor enables the coexistence of two bandwidth allocation processes (the centralized allocation process from the QoS Allocater and the Synchronous Bandwidth Allocator for Fiber Distributed Data Interface segments). The Fiber Distributed Data Interface bandwidth allocation process is defined by the Station Management standard defined by American National Standards Institute. It uses specific frames, named Resource Allocation Frames (RAF frames) defined by Station Management. Fig.8 shows the environment for 3rd Party Requestor.

The 3rd Party Requester receives requests from the QoS Allocator , like 'AllocationRequest' or ChangeRequest'. Before answering by 'AllocationConfirm' or 'ChangeConfirm it should consult the Synchronous Bandwidth Allocator, authority on Fiber Distributed Data Interface segment.

The 3rd Party Requestor includes the following functions:
· Registration:
   ■ Exchange network addressing information with the QoS Allocator.
· Translation of allocation request:
   ■ Receive the QoS Request from the QoS Allocator(NRR).
   ■ Format and forward the request to the Synchronous Bandwidth Allocator.
   ■ Receive the response from the Synchronous Bandwidth Allocator.
   ■ Format and forward the response to the QoS Allocator.
· Setting of allocation in the synchronous node:
   ■ Update the SBA MIB attributes of the synchronous node according to the response of the Synchronous Bandwidth Allocator.
· Monitoring of the FDDI ring:
   ■ Notify the QoS Allocator in case of FDDI ring modification (T_Neg change, SBA_Available change, SBA_Allocatable change...)

The QoS Management frame are used by the NRR Allocator to send QoS messages to the 3rd Party Requestor, and in return the 3rd Party Requestor will use the same type of frame to make the response.
The SMT RAF frame are used by the 3rd Party Requestor to request allocation to the SBA. and in return the SBA will use the same type of frame to make the response.

The SMT PMF frame are used by the 3rd Party Requestor to get and set SBA MIB attributes to the Synchronous Node (or NRR Requestor), and it return it will use the same type of frame to make the response.

### FDDIAllocate

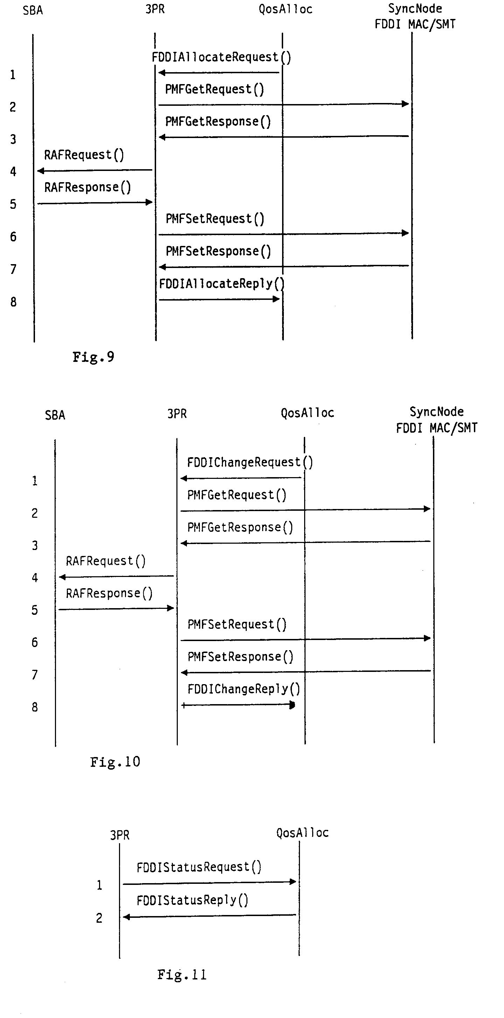

The NRR Allocator initiates a request for QoS for a particular data stream over an FDDI segment, by sending an FDDIAllocateRequest message to the 3rd Party Requestor. After processing the request the 3rd Party Requestor returns an FDDIAllocateReply message. This is shown Fig.9.

### FDDIChange

The NRR Allocator initiates a request for a change in an existing QoS allocation for a FDDI data stream by sending an FDDIChangeRequest message to the 3rd Party Requestor. After processing the request the 3rd Party Requestor returns an FDDIChangeReply message. This is shown Fig. 10.

### FDDIStatus

When at least one of those two events occurs:
· T_Neg change
· SBA_Available change
· SBA_Allocatable change
the 3rd Party Requestor initiates a FDDI Status by sending a FDDIStatusRequest message to the NRR Allocator, and in return the NRR Allocator sends a FDDIStatusReply message.

The detection of T_Neg Change shall be done by monitoring the MIB attribute fddiMACT_Neg, because this attribute is updated at each Token Rotation Time (TRT) negotiation.

The detection of SBA_Allocatable Change shall be done by checking the SBA Allocatable parameter in all RAF Request Allocation Response. This is shown Fig.9 or 10.

The detection of SBA_Available Change shall be done by monitoring the MIB attribute fddiPATHSbaAvailable, because this attribute is set at each SBA initialization.

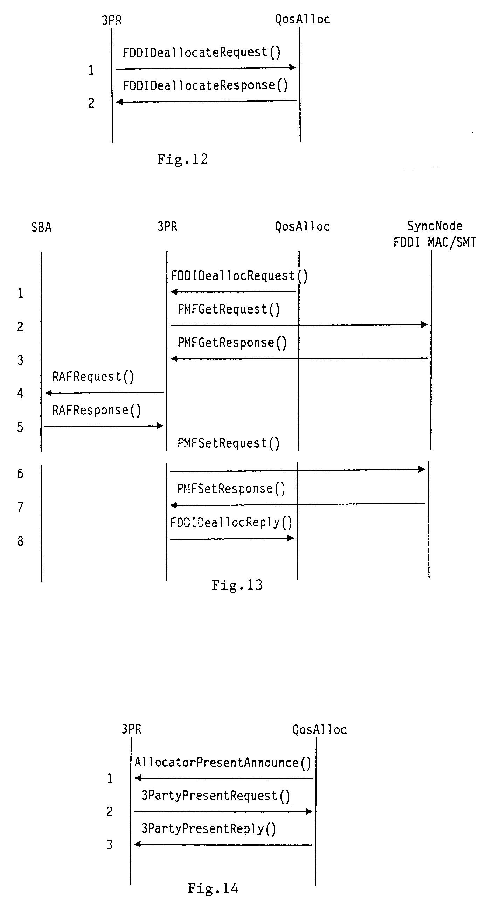

It is to be noted that after the registration flow, the 3rd Party Requestor should send a FDDIStatusRequest with SBA Allocatable, SBA Available, and T_Neg parameters in order that QoS Allocator get these values before to process any requests. This is shown Fig.11.

### FDDIDeallocate

Initiated by 3rd Party Requestor (Fig.12):
· The 3rd Party Requestor should notify the QoS Allocator for all allocation change initialized by the SBA. Also the 3rd Party Requestor shall process all RAF Change Allocation Response to detect an allocation change.
· The 3rd Party Requestor initiates a request for a deallocate in an existing QoS allocation for a particular data stream by sending a FDDIDeallocateRequest message to the NRR Allocator.

### Initiated by QoS Allocator (NRR) (Fig.13):

· The QoS Allocator should report the deallocation of a QoS stream by sending a FDDIDeallocateRequest message to the 3rd Party Requestor.
· After processing the request the 3rd Party Requestor returns an FDDIDeallocateReply message.

### Registration

Registration flows enable a NRR Allocator and 3rd Party Requestor to exchange network addressing information and for the 3rd Party Requestor to pass other information to the Allocator. The NRR Allocator or the 3rd Party Requestor may initiate the flows.

### Initiated by QoS Allocator (NRR) (Fig.14):

· As an example of Allocator-initiated registration, when the NRR Allocator is initialized it could send an AllocatorPresentAnnounce message in broadcast address. As an example of 3PR-initialized registration, when the 3rd Party Requestor is initialized it may send a 3PartyPresentRequest message in broadcast address in order to obtain QoS management parameters from the Allocator.

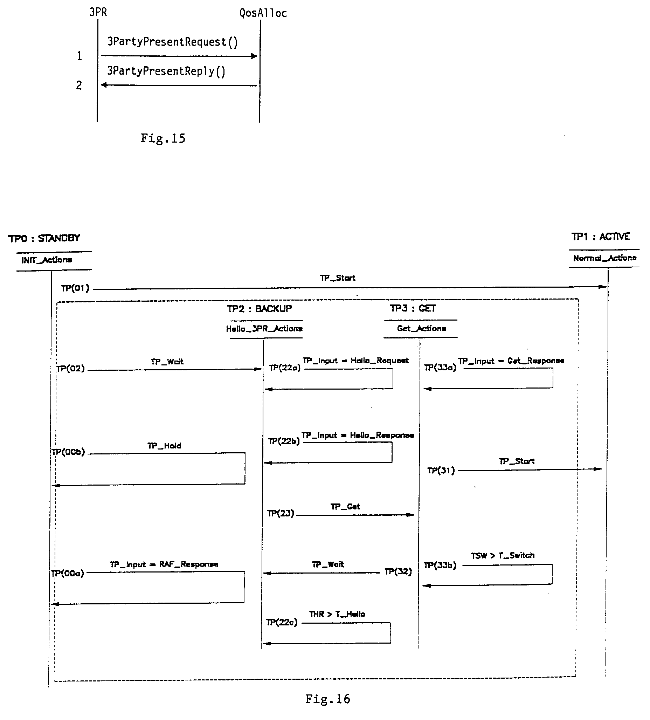

### Initiated by 3rd Party Requestor: see Fig.15.

Now, hereafter is described the modified 3PR state machine to establish high availability 3PR (HA-3PR) functionally. **The High Availability 3PR** state machine is described in Fig.16. The invention modifications are easily identified in the box in dotted line.

During the setup of the HA-3PR the Init_Actions are performed upon the STANDBY state, the **Init_Actions** are listed hereafter: 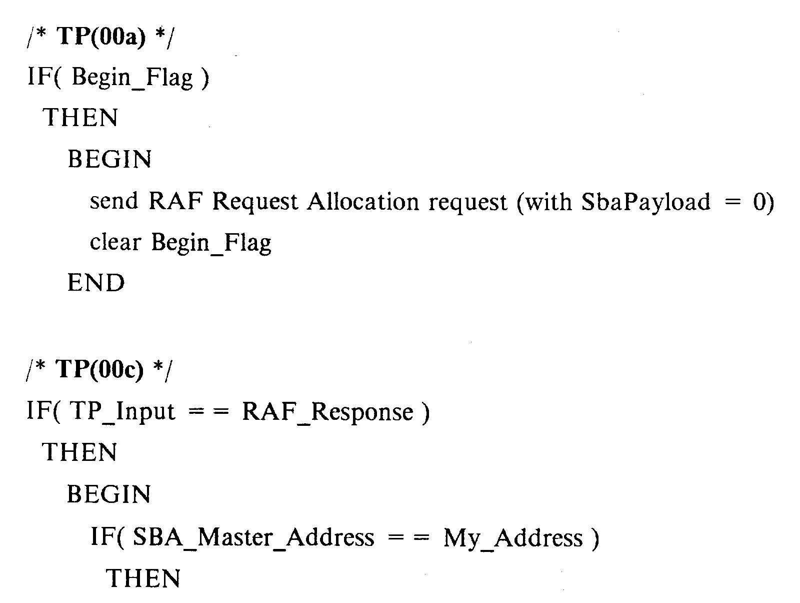 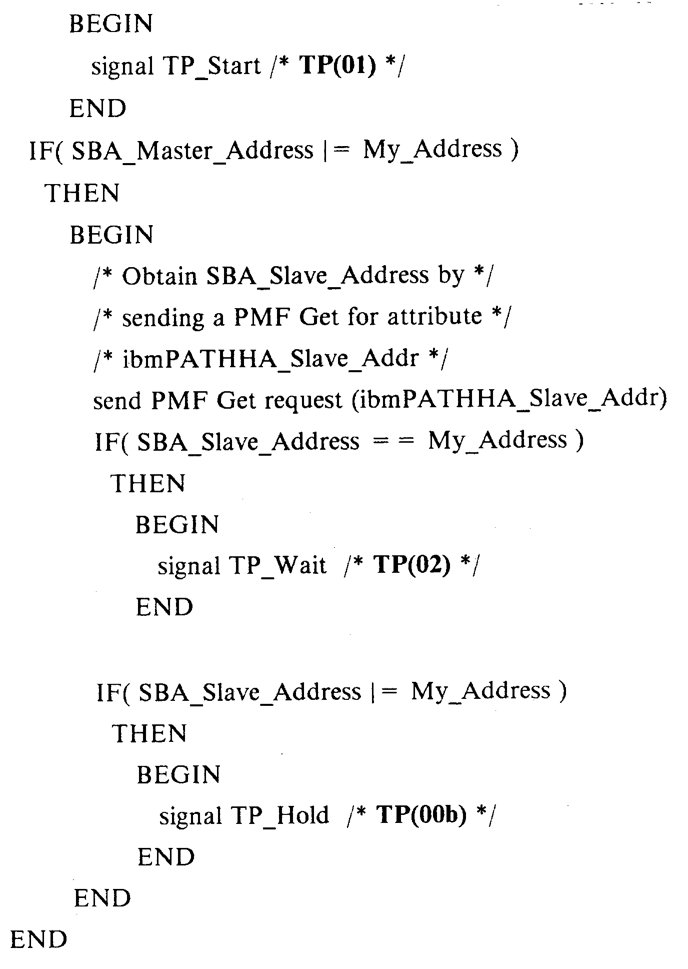
The Init_Actions queue an RAF Request Allocation message for a NULL allocation. From the RAF Request Allocation response, the HA-3PR learns the address of the SBA-master if the SBA-master address (SBA_Master_Address) is equal at local address (My_Address), the HA-3PR asserts the TP_Start signal, and transits from the STANDBY state to the ACTIVE state. The Normal_Actions are performed upon this transition, the **Normal_Actions** are listed hereafter: 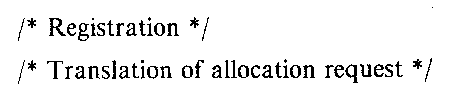 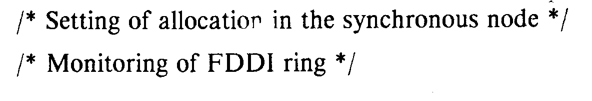
If the SBA-master address (SBA_Master_Address) is different from the local address, the Init_Actions queue an PMF Get request for IBM attribute ibmPATHHA_Slave_Addr.

From the PMF Get response, the HA-3PR learns the address of the SBA-slave:
If the SBA-slave address (SBA_Slave_Address) is different from the local address (My_Address), the HA-3PR asserts the TP_Hold signal, and the HA 3PR is stopped.

If the SBA-slave address is equal to the local address, the HA-3PR asserts the TP_Wait signal, and transits from the STANDBY state to the BACKUP state.

The Hello_3PR_Actions are performed upon this transition, the **Hello_3PR_Actions** are listed hereafter: 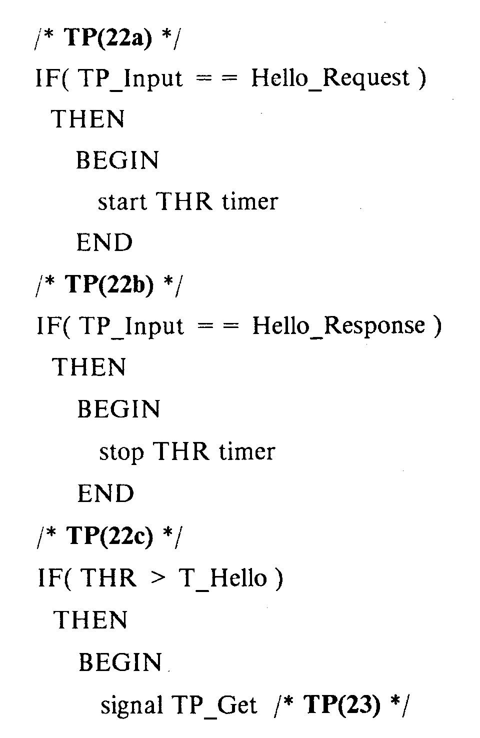 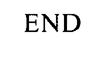
Each time a hello request message is transmitted by the SBA-slave to the SBA-master, the HA-3PR receives an hello request message.

Each time a hello response message is transmitted by the SBA-master to the SBA-slave, the HA-3PR receives an hello response message.

In case of failure of the SBA-master (no hello response message received on time), the HA-3PR asserts the TP_Get signal, and transits from the BACKUP state to the GET state. The Get_Actions are performed upon this transition, the **Get_Actions** are listed hereafter: 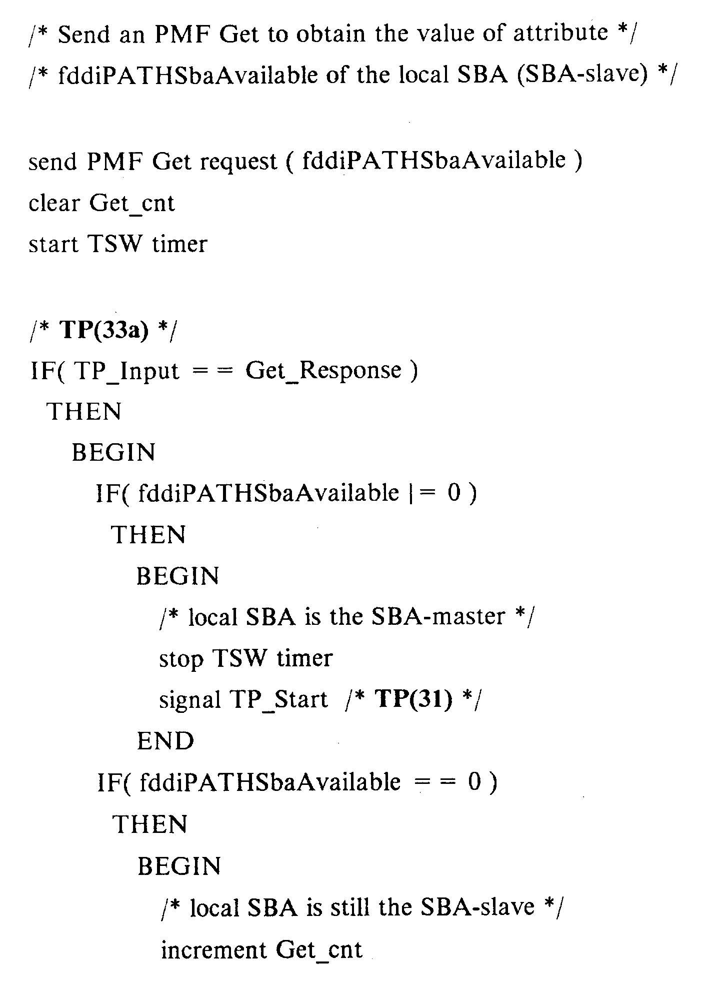 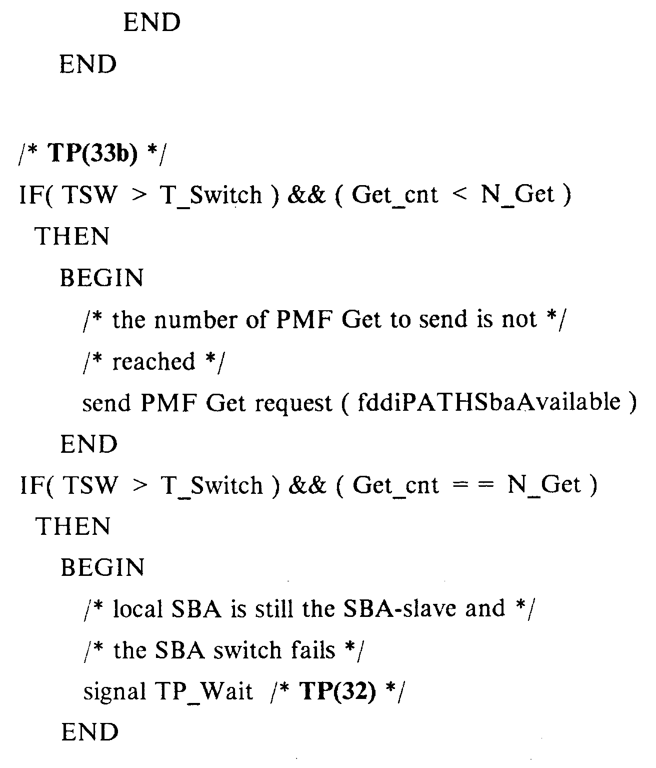
The Get_Actions queue an PMF Get request message for attribute fddiPATHSbaAvailable (as defined in the SMT standard) of the local SBA and monitors this attribute as following: the value of this attribute is equal to zero when the local SBA is SBA-slave, and the value of this attribute is different from zero when the local SBA (previously the SBA-slave) became the SBA-master. In this case the HA-3PR asserts the TP_Start signal, and transits from the GET state to the ACTIVE state.

If the fddiPATHSbaAvailable is still equal to zero when time is expired, the HA-3PR asserts the TP_Wait signal, and transits from the GET state to the BACKUP state.

The invention includes the following modifications to the variables, signals, flags, counters, and timers used within High Availability Third Party Requestor (HA-3PR):

### VARIABLES

A variable shall take on one value from a limited set of possible values. When a variable is cleared, the value of the variable becomes "none". Variables may be exported outside of Third Party Requestor.

TP_Input: A variable from 3PR Frame Parser indicating the type of SMT information to be processed. The 3PR shall queue the TP_Input variable each time it changes value and process them in the order received. The TP_Input is processed from the ACTIVE State, the BACKUP state, and the GET state and has the following values.
· RAF_Response - The TP_Input variable is set to RAF_Response when an RAF Request Allocation response message is received in the STANDBY state, state zero.
· Hello_Request - The TP_Input variable is set to Hello_Request when an Hello request message is received in the BACKUP state, state two.
· Hello_Response - The TP_Input variable is set to Hello_Response when an Hello response message is received in the BACKUP state, state two.
· Get_Response - The TP_Input variable is set to Get_Response when an PMF Get response message is received in the GET state, state three.

### SIGNALS

A signal is used to initiate a state change within Third Party Requestor. A signal causes the state change to occur and does not have to be cleared following its usage. A signal is local to Third Party Requestor and may not be exported. The signals used to drive the HA-3PR state diagram are generated by the supporting 3PR system.

TP_Start - A signal internal to HA-3PR used to transition to the ACTIVE State.

TP_Wait - A signal internal to HA-3PR used to transition to the BACKUP state.

TP_Get - A signal internal to HA-3PR used to transition to the GET state.

### FLAGS

A flag is a variable that shall take on one of two values: set or cleared. Flags are assigned values within the HA-3PR state diagram by specifying a set or clear operation. Flags are tested within the HA-3PR state diagram by checking their status or the negation of their status. Transitions initiated by flags need only be checked upon initial entry into the state and upon change to the flag. The value of a flag may be exported outside of HA-3PR.

### Operational Flags

Begin_Flag - A flag internal to HA-3PR used to direct the Init_Actions to transmit an RAF Request Allocation request message with a NULL SBA Payload.

### TIMERS

### Timer Functions

THR - Timer High Availability 3PR - THR is initialized at station initialization. HA-3PR maintains a THR timer for one purpose, to trigger Hello request messages.

TSW - Timer SBA Switch - TSW is initialized at station initialization. HA-3PR maintains a TSW timer to handle the switching time between SBA-Slave and SBA-Master.

### Timer Expiration Values

T_Hello - 1 minute
T_Switch - 1 minute

### COUNTERS

### Counter Functions

Get_cnt - Get_cnt is initialized at station initialization. This counter controls the number of PMF Get requests that are transmitted in the GET state.

### Counter Expiration Values

N_Get - The number of PMF Get request retries.

N_Get default = 3
The detailed description of the states of High Availability Third Party Requestor (HA-3PR) follows:

### State TP0 : STANDBY

The HA-3PR process begins in the Standby State. In this state, the HA-3PR send an RAF Request Allocation request and waits for the reception of the RAF Request Allocation response to learn the individual address of the SBA-master (SBA_Master_Address), and the individual address of the SBA-slave (SBA_Slave_Address).

**TP(00a)**: Start3PR - A transition to the STANDBY state is made when the HA-3PR is started. The Begin_Flag has been set during the initialization of HA-3PR.

**TP(00b)**: Stop3PR - A transition back to the STANDBY state is made when the TP_Hold signal is asserted. The HA-3PR is stopped.

**TP(00c)**: ProcessRAFResponse - A transition back to the STANDBY state is made when the variable TP_Input is set to RAF_Response. The Init_Actions are performed upon this transition.

**TP(01)**: Start3PRMaster - A transition to the ACTIVE state is made when the TP_Start signal is asserted. The Normal_Actions are performed on this transition.

**TP(02)**: Start3PRSlave - A transition to the BACKUP state is made when the TP_Wait signal is asserted. The Hello_3PR_Actions are performed on this transition.

### State TP1 : ACTIVE

In this state the HA-3PR performs the same following actions that a standard 3PR:
· Registration to QoS Allocator
· Receive and translate allocation information from the QoS Allocator
· Monitor the FDDI segment

### State TP2 : BACKUP

The HA-3PR enters the BACKUP state after the TP_Wait signal is asserted. From this state the HA-3PR listen the FDDI ring and more specialy the Hello messages to detect any failure from the SBA-master.

**TP(22a)**: ProcessHelloRequest - A transition back to the BACKUP state is made when the variable TP_Input is set to Hello_Request. The Hello_3PR_Actions are performed upon this transition.

**TP(22b)**: ProcessHelloResponse - A transition back to the BACKUP state is made when the variable TP_Input is set to Hello_Response. The Hello_3PR_Actions are performed upon this transition.

**TP(22c)**: HelloTimeOut - A transition back to the BACKUP state is made when the timer THR expires. The Hello_3PR_Actions are performed upon this transition.

**TP(23)**: SendGetRequest - A transition to the GET state is made when the TP_Get signal is asserted. The Get_Actions are performed on this transition.

### State TP3 : GET

In this state, the HA-3PR monitors the value of the MIB attribute fddiPATHSbaAvailable in order to detect when the SBA-Slave is the SBA-master.

**TP(31)**: Start3PRMaster - A transition to the ACTIVE state is made when the TP_Start signal is asserted. The Normal_Actions are performed on this transition.

**TP(32)**: Start3PRSlave - A transition to the BACKUP state is made when the TP_Wait signal is asserted. The Hello_3PR_Actions are performed on this transition.

**TP(33a)**: ProcessGetResponse - A transition back to the GET state is made when the variable TP_Input is set to Get_Response. The Get_Actions are performed upon this transition.

**TP(33b)**: SwitchTimeOut - A transition back to the GET state is made when the timer TSW expired. The Get_Actions are performed upon this transition.

## Claims

1. System for high availability of network-wide bandwidth allocation in a network including a FDDI segment, comprising:
- a client running over said network an application and a server connected to said FDDI segment comprising a Quality of Service Requestor,
- a network bandwidth allocator (NRR) comprising a Quality of Service Allocator getting requests and setting answers from and to said Quality of Service Requestor,
- a first synchronous bandwidth allocator (SBA Master) on said FDDI segment, and a second synchronous bandwidth allocator (SBA Slave) on said FDDI segment for taking over said first synchronous bandwidth allocator when it is in failure,
- a first 3rd Party Requestor (3PR Master), for interfacing between said network bandwidth allocator (NRR) and said first synchronous bandwidth allocator (SBA Master), and between said server and said first synchronous bandwidth allocator (SBA Master),
said system being characterized in that it comprises:
- a second 3rd Party Requestor (3PR Slave), for taking over said first 3rd Party Requestor and interfacing between said network bandwidth allocator (NRR) and said second synchronous bandwidth allocator (SBA Slave), and between said server and said second synchronous bandwidth allocator (SBA Slave), when said second synchronous bandwidth allocator has taken over said first synchronous bandwidth allocator.

2. System for high availability bandwidth allocation in a domain of LANs interconnected by at least one FDDI segment, said system comprising:
- a centralized bandwidth allocator (QoS Allocator) over said domain,
- a first device connected to said FDDI segment, having first means (SBA Master) for allocating synchronous bandwidth over said FDDI segment to a bandwidth requesting device, and second means (3PR Master) for interfacing between said requesting device and said centralized allocator,
- a second device (server) connected to said FDDI segment, having means for requesting synchronous bandwidth over said FDDI segment,
- a third device connected to said FDDI segment, having first means (SBA Slave) for establishing with said first means of said first device a communication, exchanging between said first and third devices information regarding the allocation of synchronous bandwidth to said second device, and taking over said first means in said first device by allocating synchronous bandwidth over said FDDI segment when said first device is in failure,
said system being characterized in that it comprises:
- second means in said third device (3PR Slave) to detect whether the first means in said third device have taken over, and when they have, take over said second means in said first device for interfacing between said requesting device and said centralized allocator.

3. The system according to claim 2, characterized in that said second means in said third device include:
- means to monitor information exchange on said FDDI segment between said first means of said first and third devices, and
- means to get parameters from said first means of said third device to determine whether they have taken over allocating synchronous bandwidth over said FDDI segment.
